**Europäisches Patentamt**

**European Patent Office**

**Office européen des brevets**

(19)

(11) Veröffentlichungsnummer: **0 112 494**
**A1**

(12) **EUROPÄISCHE PATENTANMELDUNG**

(21) Anmeldenummer: 83111591.0

(22) Anmeldetag: 19.11.83

(51) Int. Cl.³: **F 01 L 1/34**

(30) Priorität: 24.12.82 DE 3247916

(43) Veröffentlichungstag der Anmeldung: 04.07.84
Patentblatt 84/27

(84) Benannte Vertragsstaaten: DE FR GB IT

(71) Anmelder: ROBERT BOSCH GMBH, Postfach 50,
D-7000 Stuttgart 1 (DE)

(72) Erfinder: Denz, Helmut, Rosenbergplatz 2,
D-7000 Stuttgart 1 (DE)
Erfinder: Person, Martin, A.-Lämmle-Strasse 7,
D-7141 Oberriexingen (DE)

(54) Vorrichtung zur Steuerung der Ventile einer Brennkraftmaschine über eine Nockenwelle.

(57) Es wird eine Vorrichtung zur Steuerung der Ventile einer Brennkraftmaschine über vorzugsweise zwei Nockenwellen (10) vorgeschlagen, wobei mindestens bei einer das Antriebsrad (12, 17) um einen vorgebbaren Winkel hydraulisch drehbar darauf gelagert ist. Die Drehung ist in Abhängigkeit wenigstens der Drehzahl der Brennkraftmaschine über ein Elektromagnetventil (35) am Zulauf und/oder Ablauf der Hydraulikflüssigkeit steuerbar. Das Magnetventil (35) wird über einen Rechner (36) gesteuert, der weiterhin wenigstens die Zündung und/oder die Kraftstoffeinspritzung der Brennkraftmaschine steuert. Dadurch kann auf einfache Weise eine sehr exakt und variabel einstellbare Steuerung der Ventilüberschneidung (Vüs) vorgenommen werden, insbesondere auch in Abhängigkeit von zusätzlichen Parametern, wie der Last und der Beschleunigung.

EP 0 112 494 A1

0112494

R. 18288
17.12.1982 Ve/Hm

ROBERT BOSCH GMBH, 7000 STUTTGART 1

## Vorrichtung zur Steuerung der Ventile einer Brennkraftmaschine über eine Nockenwelle

Stand der Technik

Die Erfindung geht aus von einer Vorrichtung zur Steuerung der Ventile einer Brennkraftmaschine über eine Nockenwelle nach der Gattung des Hauptanspruchs. Eine solche Vorrichtung ist schon aus der DE-OS 31 26 620 bekannt. Dort wird hydraulisch durch den Öldruck über einen in eine Schrägverzahnung eingreifenden Steuerschieber das Antriebsrad der Nockenwelle relativ zur Nockenwelle winkelmäßig verschoben. Die Steuerung der Hydraulikflüssigkeit erfolgt über ein mechanisches Ablaßventil, das als Fliehkraftschalter ausgebildet ist und bei einer bestimmten Drehzahl der Nockenwelle öffnet, um den Öldruck abzubauen und dadurch eine winkelmäßige Verschiebung der Nockenwelle zu erreichen.

. . .

Die Einlaß/Auslaß-Ventilsteuerung über eine Nockenwelle
stellt bei Otto-Motoren herkömmlicher Bauart einen Kompromiß der Ventilüberschneidung Vüs dar: Bei kleinen
Drehzahlen und Lasten ist unter anderem aus Laufruhe-
und Abgasgründen eine kleine Ventilüberschneidung, bei
großen Drehzahlen und Lasten dagegen zur Erzielung
hoher Leistung eine große Ventilüberschneidung vorteilhaft. Bringt man beispielsweise die Ventilsteuerung gemäß dem angegebenen Stand der Technik an eine
Nockenwelle zur Steuerung der Einlaßventile an, so
ist unterhalb der Umschaltdrehzahl von z.B. 1600 U/min
die Vüs klein. Wegen der geringen internen Abgasrückführung ist die Laufruhe gut und die HCEmissionen sind
niedrig (insbesondere im Leerlauf und bei niedriger Last).
Oberhalb der Umschaltdrehzahl wird auf eine große Vüs umgeschaltet, wodurch bei hoher Last ein großes Drehmoment
erzeugt wird.

Nachteilig an der bekannten Anordnung ist zum einen der
hohe technische Aufwand bei der Realisierung des mechanisch drehzahlgesteuerten Druckablaßventils, das zudem
nur bei einer ganz bestimmten Drehzahl schaltet. Eine
variable Umschaltung in Abhängigkeit der Drehzahl, insbesondere eine bestimmte Drehzahlfunktion ist nicht
möglich. Bei einer Störung des Fliehkraftschalters muß
in aufwendiger Weise die Nockenwelle ausgebaut werden.

Weiterhin hat es sich gezeigt, daß bei niederer Drehzahl
und hoher Last (z.B. Beschleunigungsphasen) die NOx-
Emissionen höher sind und ein niedrigeres Drehmoment
erzeugt wird, als dies mit großer Vüs erreichbar wäre.
Ebenso hat es sich gezeigt, daß bei niedriger Last
und hoher Drehzahl (oberhalb der Umschaltdrehzahl) auf-

...

grund des noch hohen Restgasanteils die Laufruhe und die
HC-Emissionen sehr schlecht sind. Das Restgas ist außerdem im gesamten Drehzahlbereich oberhalb der Umschaltdrehzahl, besonders bei niederen Lasten, aber auch noch
bis zu mittleren Lasten, für einen erhöhten Kraftstoffverbrauch verantwortlich. Dies führt zu unvollständiger
Verbrennung und verlangsamt diese, was höhere Wärmeverluste bedeutet. Außerdem muß der Motor bei kleiner
Vüs für gleiche Last mit größerer Drosselklappenöffnung betrieben werden, als mit großer Vüs, was geringere Drosselverluste zur Folge hat. Insgesamt hat es
sich somit gezeigt, daß eine Steuerung der Vüs allein
durch die Drehzahl unbefriedigend ist. Bei der Vorrichtung gemäß dem angegebenen Stand der Technik ist jedoch
eine Beeinflussung durch weitere Einflußgrößen nicht
möglich.

Vorteile der Erfindung

Die erfindungsgemäße Vorrichtung mit den kennzeichnenden
Merkmalen des Hauptanspruchs hat demgegenüber den Vorteil,
daß mit geringstem technischen Aufwand, d.h. unter Verwendung eines ohnehin vorhandenen Rechners mit den ohnehin vorhandenen Eingangsgrößen eine sehr variabel einstellbare Ventilüberschneidung (Vüs) über die Nockenwellensteuerung erreichbar ist. Durch Verknüpfung verschiedener, ohnehin vorhandener Parameter im Rechner lassen
sich auf einfachste Weise die verschiedensten Funktionen
aus mehreren Parametern als Steuerfunktionen für die
Vüs heranziehen. Im wesentlichen wird dazu lediglich
ein Elektromagnetventil im hydraulischen Zu- und/oder
Ablauf benötigt.

Durch die in den Unteransprüchen aufgeführten Maßnahmen sind vorteilhafte Weiterbildungen und Verbesserungen der im Hauptanspruch angegebenen Vorrichtung möglich. Besonders vorteilhaft ist die Steuerung der Vüs in Abhängigkeit der Drehzahl und der Last. Durch Optimierung von Betriebspunkten in Abhängigkeit der Last und der Drehzahl kann eine deutliche Verbrauchsverminderung, Laufruhenverbesserung und eine Verbesserung des Fahrverhaltens in den ruckelempfindlichen Bereichen des Leerlaufs und der unteren bis mittleren Teillast erreicht werden. Gleichzeitig kann eine Verringerung der HC-Emissionen erreicht werden. Durch empirische Bestimmung der jeweils günstigsten Vüs bei den verschiedenen Kombinationen Drehzahl-Last kann leicht die notwendige oder für den jeweiligen Anwendungsfall wünschenswerteste Funktion aufgestellt und im Rechner realisiert werden.

Weiterhin ist es besonders vorteilhaft, als weitere funktionale Eingangsgröße noch die Laständerung (Beschleunigung) mit zu erfassen. Dadurch kann eine drastische NOx-Reduzierung erreicht werden, wodurch in vielen Fällen auch bei scharfen Abgasbestimmungen ein externes Abgasrückführungssystem überflüssig gemacht wird.

Eine weitere Verbesserung des Systems kann dadurch erreicht werden, daß das die Vüs steuernde Elektromagnetventil kontinuierlich in Abhängigkeit der vorgebbaren Funktion geregelt wird. Dazu wird zwar ein Stellungsgeber für den Drehwinkel zwischen Antriebsrad und Nockenwelle benötigt, jedoch kann hier eine noch feinere Anpassung und verbesserte Eigenschaften erreicht werden.

Zeichnung

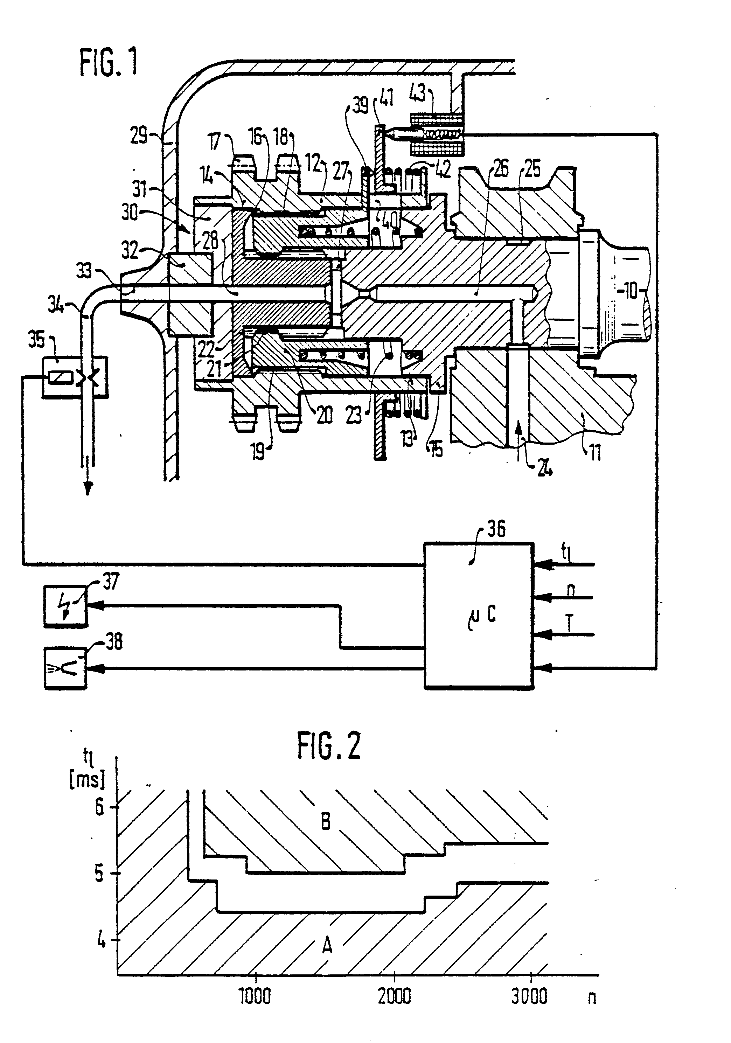

Ein Ausführungsbeispiel der Erfindung ist in der Zeichnung dargestellt und in der nachfolgenden Beschreibung näher erläutert. Es zeigen Figur 1 das Ausführungsbeispiel und Figur 2 eine Steuerfunktion in Abhängigkeit von Drehzahl und Last.

Beschreibung des Ausführungsbeispiels

Figur 1 zeigt das Ende einer Nockenwelle 10, die in bekannter und nicht näher dargestellter Weise Nocken zur Steuerung der Einlaß- und/oder Auslaßventile einer Brennkraftmaschine aufweist. Zur getrennten Steuerung der Einlaß- und Auslaßventile können auch mehrere Nockenwellen vorgesehen werden. Die Nockenwelle 10 ist im Zylinderkopfteil 11 gelagert. Eine gleichachsig zur Nockenwelle angeordnete zylindrische Muffe 12 ist an ihren Enden drehbar auf den zylindrischen Flächen 13 und 14 der Nockenwelle 10 gelagert. Axiale Verschiebungen der Muffe 12 gegenüber der Nockenwelle 10 sind durch Anschläge 15, 16 verhindert. Die Muffe 12 weist eine Außenverzahnung 17 auf, über die der nicht näher dargestellte Antrieb über eine Kette oder einen Zahnriemen von der Kurbelwelle her erfolgt. Die Muffe 12 weist ferner eine Innenverzahnung 18 auf, die in eine Außenverzahnung 19 eines Ringkolbens 20 eingreift. Der Ringkolben 20 weist ferner eine Innenverzahnung 21 auf, die in eine Außenverzahnung 22 der Nockenwelle 10 eingreift. Mindestens eine der ineinander eingreifenden Verzahnungen 18/19 bzw. 21/22 ist eine Schrägverzahnung. Somit kann der Ringkolben 20 in dem durch die Muffe 12 und der Nockenwelle 10 begrenzten Ringraum verschoben werden. Da die Verzahnungen stets

...

im Eingriff bleiben, wird bei einer Relativbewegung des Ringkolbens 20 in axialer Richtung die Nockenwelle 10 relativ zur Muffe winkelmäßig verdreht. Dies bedeutet, daß diese Verdrehung der Nockenwelle auch gegenüber der Kurbelwelle des Motors erfolgt. Der Grad der Verdrehung, der sich auf die Steuerzeiten der durch die Nockenwelle gesteuerten Ventile auswirkt, hängt vom Grad der axialen Verschiebung des Ringkolbens 20 und von der Neigung der Schrägverzahnung ab. Werden z.B. lediglich die Einlaßventile durch eine derart ausgestaltete Nockenwelle gesteuert, die Auslaßventile dagegen durch eine starr gekoppelte Nockenwelle, so ergibt sich eine Veränderung der Ventilüberschneidung (Vüs) in Abhängigkeit der Verschiebung des Ringkolbens 20.

Der Ringkolben 20 ist in einer seiner Endlagen dargestellt, in der er durch die Vorspannung einer Feder 23 gehalten wird. Auf die der Feder gegenüberliegenden Ringfläche des Ringkolbens 20, die senkrecht zur Nockenwellenachse liegt, kann ein hydraulischer Druck einwirken, durch den der Ringkolben 20 gegen die Kraft der Feder verschoben werden kann. Die Hydraulikflüssigkeit, insbesondere das unter Druck stehende Motorenöl gelangt über die Leitung 24 im Kopfteil 11, eine Ringnut 25 in der Nockenwelle 10, eine Leitung 26 in der Nockenwelle und Radialbohrungen 27 zur Stirnfläche des Ringkolbens 20. Eine Verschiebung des Ringkolbens 20 tritt natürlich nur bei ausreichendem Öldruck auf, d.h., wenn eine Ablaßleitung 28, die in axialer Richtung zur Stirnfläche der Nockenwelle 10 geführt ist gesperrt ist. Wenn die Ablaßleitung dagegen geöffnet ist, so kann der Öldruck ohne Wirkung auf den Ringkolben 20 für diese Ablaßleitung abfließen.

. . .

- 7 -

0112494

Die bis hierher beschriebenen Baugruppen sind aus dem
eingangs angegebenen Stand der Technik bekannt und dort
noch detaillierter beschrieben. Die folgende Beschreibung erläutert die erfindungsgemäße Ausgestaltung.

Zur Weiterführung der Ablaßleitung 28 durch die Zylinderkopfwand 29 nach außen ist ein Durchführungslager 30
vorgesehen. Dabei sitzt das drehende Teil 31 des Durchführungslagers stirnseitig in der zylindrischen Muffe
12, während das feststehende Teil 32 dichtend in der
Zylinderkopfwand 29 eingelassen ist (bzw. dichtend an
dieser Wand anliegt). Die Bohrung durch das Durchführungslager 30 setzt sich als Bohrung 33 durch die Zylinderkopfwand 29 fort und mündet in eine externe Ablaßleitung 34 über die das Öl wieder in den Ölkreislauf
zurückgeführt wird. In die externe Ablaßleitung 34 ist
ein Magnetventil 35 geschaltet, das durch einen Mikrorechner 36 steuerbar ist. Dieser Mikrorechner 36 steuert
weiterhin die Zündung 37 und die Kraftstoffeinspritzung
38 der Brennkraftmaschine. In der Praxis benötigte
Schaltendstufen sind zur Vereinfachung nicht näher
dargestellt. Dem Mikrorechner 36 sind in bekannter
Weise Eingangsparameter zugeführt, in Abhängigkeit
derer anhand vorgebbarer Funktionen und/oder Kennfelder die Zündzeitpunkte und die Einspritzzeiten
festgelegt werden. In äquivalenter Weise können die
Schaltvorgänge für das Magnetventil 35 festgelegt
werden. Als Eingangsgrößen sind dem Mikrorechner 36
die Last $t_1$, die Drehzahl n (mit Bezugsmarke) und
Temperatur T zugeführt.

Im Mikrorechner 36 wird nun in Abhängigkeit der
Eingangsgrößen $t_1$ und n eine vorzugsweise zuvor
empirisch ermittelte Funktion gebildet, wie sie
beispielsweise in Figur 2 dargestellt ist. Dabei

. . .

0112494

ist im Bereich B das Magnetventil 35 geöffnet, der Ringkolben 20 dadurch in der gezeichneten Stellung. Im Bereich
A ist das Magnetventil 35 geschlossen und der Ringkolben
20 in der entgegengesetzten Extremstellung, in der eine
große Ventilüberschneidung (Vüs) eingestellt wird. Der
Zwischenbereich zwischen A und B stellt die Hysterese
dar, die ein ständiges Hin- und Herschalten des Magnetventils verhindert. Als Lastsignal wird dabei vorteilhaft das für die Einspritzung im Rechner ohnehin ermittelte Lastsignal $t_1 = K \cdot Q_1/n$ verwendet ($Q_1$ = Luftdurchsatz). Prinzipiell können jedoch auch andere Lastsignale, wie z.B. der Absolutdruck oder die Drosselklappenstellung verwendet werden. Gemäß Figur 2 wird
bei kleinen Drehzahlen, insbesondere beim Start, nur
mit kleiner Vüs gefahren, um Start und Hochlauf zu verbessern. Deshalb muß darauf geachtet werden, daß die
Zuordnung des Öldrucksteuerkreislaufs so gewählt ist,
daß ohne Öldruck die Vüs klein ist, da vor dem Start
noch kein Öldruck vorhanden ist. Bei hohen Drehzahlen
und kleiner Last wird ebenfalls mit kleiner Vüs gefahren. Dagegen wird bei hoher Drehzahl und großer Last das
Magnetventil 35 geschlossen, so daß die Vüs groß wird.

Vorteilhaft kann noch eine Beschleunigungskorrektur eingebaut werden, d.h., im Rechner wird ein differenziertes
Signal von der Drehzahl oder von der Last gebildet,
das ab einem bestimmten Wert für eine gewisse Zeit eine
Schließung des Magnetventils 35 bewirkt. Dies führt zu
einer deutlichen Reduzierung des NOx-Anteils im Abgas.

Anstelle des bisher beschriebenen Umschaltens des Magnetventils 35 zwischen der geschlossenen und der geöffneten Stellung und damit der Steuerung des Ringkolbens
20 in seine beiden Extremstellungen wird in einer verbesserten Ausführung vorteilhaft eine kontinuierliche Ansteuerung des Magnetventils 35 vorgesehen. Dazu muß das Elektromagnetventil in bekannter Weise mit einem Steuertastverhältnis gesteuert werden, um eine kontinuierliche Querschnittsveränderung in der externen Ablaßleitung 34 zu erreichen. Dadurch ist die Einstellung beliebiger Vüs möglich. Da der Öldruck einer Brennkraftmaschine gewöhnlich stark schwankt, ist jedoch hierzu eine Regelung erforderlich, für die als Ist-Wert eine Rückmeldung der Stellung des Ringkolbens 20 zum Mikrorechner 36 erfolgen muß. Im Mikrorechner 36 wird dann in Abhängigkeit der gebildeten Funktion aus Drehzahl und Last, bzw. aus Drehzahl und Last und Beschleunigung ein entsprechender Soll-Wert gebildet und der Ist-Wert über den Regelkreis auf den Soll-Wert eingestellt. Zur Bildung dieses Ist-Werts weist der Ringkolben 20 eine radiale Verlängerung 39 auf, die durch einen axialen Schlitz 40 in der zylindrischen Muffe 12 nach außen hin durchragt. Diese Verlängerung 39 verschiebt einen Ringteller 41 axial gegen die Kraft einer Feder 42. Ein mit der Zylinderkopfwand 29 verbundener Weggeber 43 tastet die Stellung dieses Ringtellers 41 ab, wodurch indirekt die Ventilüberschneidung (Vüs) erfaßt wird. Das Signal dieses vorzugsweise induktiven Weggebers 43 ist dem Mikrorechner 36 zugeführt. Der Soll-Wert, mit dem der erfaßte Ist-Wert verglichen wird, kann vorteilhaft auch als Kennfeld im Mikrorechner 36 in Abhängigkeit der erwähnten Parameter niedergelegt sein.

R. 18288
17.12.1982 Ve/Hm

0112494

ROBERT BOSCH GMBH, 7000 STUTTGART 1

Ansprüche

1. Vorrichtung zur Steuerung der Ventile einer Brennkraftmaschine über eine Nockenwelle, deren Antriebsrad um einen vorgebbaren Winkel hydraulisch drehbar
auf der Nockenwelle gelagert ist, wobei die Drehung
in Abhängigkeit der Drehzahl der Brennkraftmaschine
über ein Ventil am Zulauf und/oder Ablauf der Hydraulikflüssigkeit steuerbar ist, dadurch gekennzeichnet,
daß das Ventil als Elektromagnetventil (35) ausgebildet
und durch einen Rechner steuerbar ist, der weiterhin
wenigstens die Zündung und/oder die Kraftstoffeinspritzung der Brennkraftmaschine steuert.

2. Vorrichtung nach Anspruch 1, dadurch gekennzeichnet, daß das Ventil (35) zwei Schaltstellungen aufweist, die in Abhängigkeit einer vorgebbaren Funktion
in Abhängigkeit der Drehzahl (n) und Last ($t_1$) der
Brennkraftmaschine anfahrbar sind.

3. Vorrichtung nach Anspruch 2, dadurch gekennzeichnet, daß die vorgebbare Funktion weiterhin die Laständerung (Beschleunigung) berücksichtigt.

. . .

4. Vorrichtung nach Anspruch 2 oder 3, dadurch gekennzeichnet, daß die Ventilschaltvorgänge eine Hysterese
aufweisen.

5. Vorrichtung nach Anspruch 1, dadurch gekennzeichnet, daß das Ventil (35) kontinuierlich in Abhängigkeit
einer vorgebbaren Funktion von Drehzahl und Last der
Brennkraftmaschine regelbar ist, wobei ein Stellungsgeber (43) für den Drehwinkel zwischen Antriebsrad
(17, 12) und Nockenwelle (10) vorgesehen ist, dessen
Signal zum Rechner (36) als Ist-Wert rückgeführt ist.

6. Vorrichtung nach Anspruch 5, dadurch gekennzeichnet, daß die vorgebbare Funktion weiterhin die Laständerung (Beschleunigung) berücksichtigt.

7. Vorrichtung nach einem der Ansprüche 2 bis 6, dadurch
gekennzeichnet, daß die vorgebbare Funktion als Kennfeld im Rechner (36) vorliegt.

1/1

0112494

FIG. 1

FIG. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| E | DE-A-3 210 914 (ATLAS)<br><br>* Seite 11, Absatz 2; Figur 7 * | 1-3,5,6 | F 01 L 1/34 |
| E | FR-A-2 526 858 (ALFA ROMEO)<br><br>* Ansprüche 1-6; Figuren 1,2 * | 1-3,5-7 | |
| Y | FR-A-2 376 290 (PEUGEOT)<br>* Seite 5, Zeilen 4-19 * | 1,2,5 | |
| Y | US-A-4 009 695 (ULE)<br><br>* Spalte 18, Zeile 1 - Spalte 20, Zeile 64 * | 1-3,5,6 | |
| A | DE-A-1 916 167 (DAIMLER-BENZ)<br>* Seite 11, Anspruch 1 - Seite 13, Anspruch 16 * | 1-3 | RECHERCHIERTE SACHGEBIETE (Int. Cl. 3)<br><br>F 01 L |

Der vorliegende Recherchenbericht wurde für alle Patentansprüche erstellt.

| Recherchenort<br>DEN HAAG | Abschlußdatum der Recherche<br>21-03-1984 | Prüfer<br>WASSENAAR G. |
|---|---|---|

BAD ORIGINAL